# EUROPEAN PATENT SPECIFICATION

(11) **EP 3 483 832 B1**
(45) Date of publication and mention of the grant of the patent: **23.08.2023**
(21) Application number: 17824067.7
(22) Date of filing: 27.06.2017
(51) Int. Cl.: G06V 20/58, G06V 40/10, G06V 20/56

(54) **IMAGE PROCESSING DEVICE**
BILDVERARBEITUNGSVORRICHTUNG
DISPOSITIF DE TRAITEMENT D'IMAGES

(30) Priority: 05.07.2016 JP 2016133584
(43) Date of publication of application: 15.05.2019
(73) Proprietor: Hitachi Astemo, Ltd., Hitachinaka-shi, Ibaraki 312-8503 (JP)
(72) Inventor: TAKEMURA Masayuki, Tokyo 100-8280 (JP); SHIMA Takeshi, Tokyo 100-8280 (JP); NAGASAKI, Takeshi, Hitachinaka-shi Ibaraki 312-8503 (JP)
(74) Representative: MERH-IP Matias Erny Reichl Hoffmann Patentanwälte PartG mbB
(86) International application number: PCT/JP2017/023504
(87) International publication number: WO 2018/008461

(56) References cited:
- EP-A1- 2 919 197
- EP-A2- 2 950 521
- WO-A1-2015/163078
- JP-A- 2007 096 684
- JP-A- 2012 088 785
- JP-A- 2012 240 530
- JP-A- 2014 146 164
- US-A1- 2013 182 111
- US-A1- 2015 262 363

## Description

### Technical Field

The present invention relates to an image processing device that performs image processing on an image captured by a camera installed in a vehicle, for example.

### Background Art

There is an increasing trend of commercializing applications that recognize the surrounding environment of a vehicle by using a camera installed in the vehicle. Among these, there is a high expectation for preventive safety technologies for preventing accidents by using a recognized object and for application to vehicle control technology to achieve autonomous driving. Recognition technologies used for vehicle control demand high reliability because of possibility of accidents in case of failure.

A target identification device (PTL 1) selects one optimum exposed image in order to recognize a target among images obtained in time division imaging under different exposure conditions, so as to recognize the target. In addition, there is an object detection device that weights each of divided regions of a recognition target on the basis of an irradiation range of a headlight and performs pattern matching of comparing with a learning result in accordance with the weight (PTL 2). Furthermore, PTL 3 discloses a camera capable of reducing motion blur in a low luminance environment. PTL 4 discloses an external field recognition device capable of obtaining a detection result with necessary accuracy with a limited configuration when detecting plural kinds of objects from a captured image. Eventually, PTL 5 also discloses an external environment recognizing apparatus capable of performing vehicle detection, pedestrian detection, and road sign recognition in the front of an own vehicle, as recognition applications, simultaneously, using an image of a stereo camera.

### Citation List

### Patent Literature

PTL 1: JP 2012-088785 A
PTL 2: JP 2011-90450 A
PTL 3: EP 2 950 521 A2
PTL 4: WO 2015 / 163 078 A1
PTL 5: US 2013 / 182 111 A1

### Summary of Invention

### Technical Problem

A surrounding environment of an own vehicle is imaged by using a camera installed in the vehicle, the type of an object is recognized from among object candidates obtained by the camera, a pedestrian, a vehicle, or the like is specified, and an alarm and control are output on the basis of a prediction result corresponding to the type of the object and a result of traveling path estimation of the own vehicle.

However, camera recognition has difficulty in visually recognizing the shape of the recognition target in situations in which both a bright region and a dark region are simultaneously imaged, including a situation in which imaging, for example, a nighttime headlight irradiation region and the other regions, or imaging a sunshine region and a shaded region at daytime is performed simultaneously, specifically difficult in a region where the exposure conditions are not compatible although visual recognition is possible on an image in a region where the exposure condition is compatible.

PTL 1 discloses a method of capturing images of different exposure conditions in time series to handle bright objects and dark objects. PTL 2 proposes a method of performing matching using the lower body of a pedestrian with reduced weight on the head of the pedestrian captured as a dark image, unrecognizable under one exposure condition.

While each of these conventional methods has its own effect, the method in PTL 1 has a problem in a situation in which one half of an object is dark and the other half is bright, that each half of different object is extracted and that it is difficult to make distinction as a pedestrian. In addition, PTL 2 also attempts pedestrian identification merely using the lower body of a pedestrian as compared with a normal time, leading to expectation of low pedestrian identification accuracy. While the technique of PTL 2 can detect an object as a three-dimensional object, it is still difficult to specify the type of object merely by partially visual recognition, such as whether it is a person or a car, with high reliability and accuracy, leading to a problem to be solved.

The present invention has been made in view of the above problems, and aims to provide an image processing device as defined in independent claim 1 capable of performing type recognition properly with high accuracy as a three-dimensional object such as a pedestrian and a vehicle even in an image with lower contrast than conventional cases. Specific embodiments are defined in the dependent claims.

### Solution to Problem

An image processing device to solve the above problem is characterized by being equipped with an image acquisition unit 100 for acquiring a plurality of images having different exposure conditions, an object candidate detection unit 200 for detecting object candidates from the images, and an object recognition unit 300 for recognizing objects using a plurality of images 110 and 120 having different exposure conditions in accordance with a plurality of partial regions within the image regions that correspond to the object candidates.

### Advantageous Effects of Invention

According to the present invention, it is possible to perform type recognition properly with high accuracy as a three-dimensional object such as a pedestrian and a vehicle even in an image with lower contrast than conventional cases.

Further features related to the present invention will become apparent from the description of the present specification and the accompanying drawings. Problems, configurations, and effects other than in the above description will become apparent by the following embodiments.

### Brief Description of Drawings

[FIG. 1] FIG. 1 is a diagram illustrating a configuration of an in-vehicle environment recognition device in a first example.
[FIG. 2] FIG. 2 is a diagram illustrating a configuration of an object candidate detection unit.
[FIG. 3] FIG. 3 is a diagram illustrating a configuration of an object recognition unit.
[FIG. 4] FIG. 4 is a view illustrating a configuration of an invisible region determination unit.
[FIG. 5] FIG. 5 is a diagram illustrating a configuration of a feature amount extraction unit.
[FIG. 6] FIG. 6 is a diagram illustrating a configuration of a feature amount integration unit.
[FIG. 7] FIG. 7 is a view illustrating a configuration of a pattern matching unit.
[FIG. 8] FIG. 8 is a view illustrating an example of an imaging method of double exposure.
[FIG. 9] FIG. 9 is a schematic diagram of a situation in which a night pedestrian is imaged and a captured image.
[FIG. 10] FIG. 10 is a captured image in which the upper body of a pedestrian is in the sun and the lower body is in the shade.
[FIG. 11] FIG. 11 is a diagram conceptually illustrating integration of feature amounts.
[FIG. 12] FIG. 12 is a diagram illustrating a method of integrating feature amounts.
[FIG. 13] FIG. 13 is a flowchart illustrating details of processing.
[FIG. 14] FIG. 14 is a view illustrating a method of determining the presence or absence of an invisible region around an object candidate.
[FIG. 15] FIG. 15 is a diagram illustrating a configuration of an in-vehicle stereo camera environment recognition device according to a second example.
[FIG. 16] FIG. 16 is a diagram illustrating a configuration of a normal object candidate detection unit.
[FIG. 17] FIG. 17 is a diagram illustrating a configuration of a dark object candidate detection unit.
[FIG. 18] FIG. 18 is a diagram illustrating a configuration of a stereo object recognition unit. Description of Embodiments

Exemplary embodiments of the present invention will now be described with reference to the accompanying drawings.

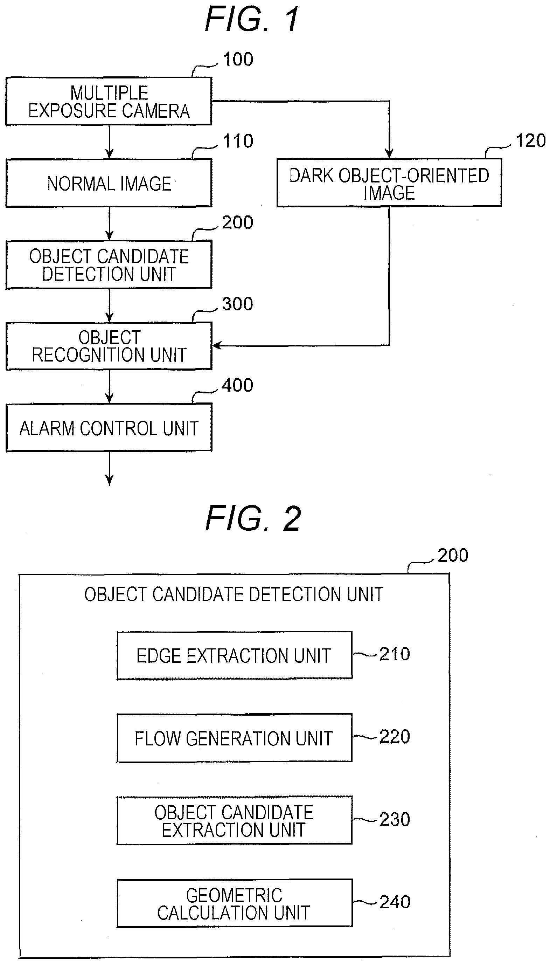

### <FIG. 1 Outline of in-vehicle environment recognition device>

FIG. 1 illustrates a configuration diagram of an in-vehicle environment recognition device.

The in-vehicle environment recognition device performs image processing of surrounding images captured by a camera installed in an own vehicle to recognize the surrounding environment such as an obstacle, and is implemented by cooperation between hardware such as a microcomputer and a software program.

As illustrated in FIG. 1, the in-vehicle environment recognition device includes a multiple exposure camera 100, an object candidate detection unit 200, an object recognition unit 300, and an alarm control unit 400. The multiple exposure camera 100 is attached to the vehicle so as to image the front of the own vehicle. The multiple exposure camera 100 can achieve imaging in which a normal image (first image) and a dark object-oriented image (second image) are appropriately selected as images having different exposure conditions.

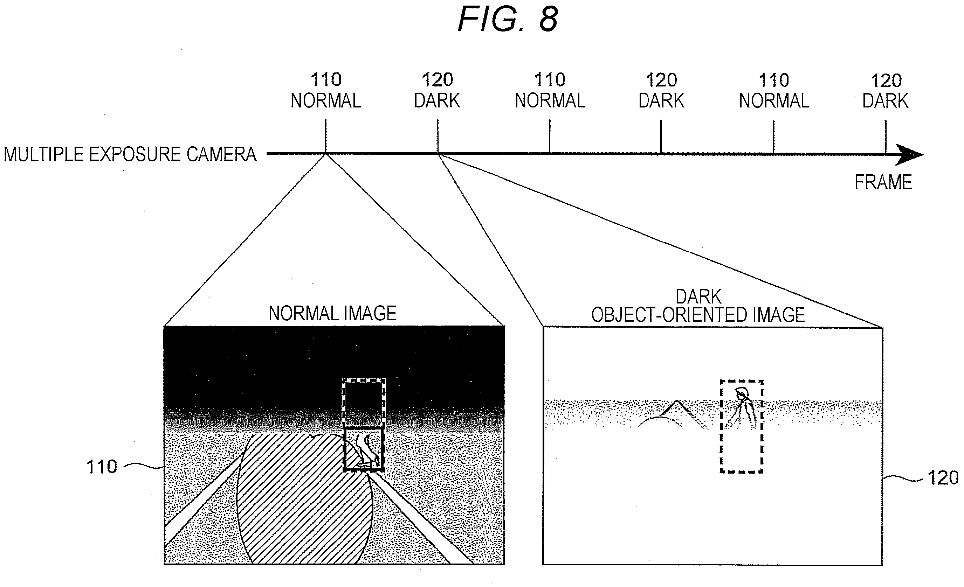

The normal image and the dark object-oriented image are obtained using the multiple exposure camera 100. As illustrated in FIG. 8, the multiple exposure camera 100 captures images having different exposure conditions alternately in time division imaging by using imaging elements of a same camera. The example of FIG. 8 is an image of the front of the own vehicle captured by the multiple exposure camera 100 in nighttime driving, in which a normal image 110 and a dark object-oriented image 120 are alternately obtained in a time division system (image acquisition unit). The normal image 110 is captured under a first exposure condition, being set to be exposed to enable easy viewing of the own vehicle traveling path imaged in the image central region. The dark object-oriented image 120 is captured under a second exposure condition, being a long-time exposure image or an image with increased gain, being set to be exposed to view darker regions compared with the normal image 110. With adjustment of shutter time or gain, the multiple exposure camera 100 can image the normal image 110 (first image) and the dark object-oriented image 120 (second image) having different exposure conditions.

In practice, imaging under exposure conditions with higher multiplicity may be performed when a camera with a high frame rate is used. For example, imaging is performed with alternate switching of five multiplicities of exposure conditions at short moments and switching the exposure conditions for viewing from normal to darker objects to five levels of switching conditions, so as to obtain images enabling visual recognition of object regions having various levels of brightness.

The object candidate detection unit 200 and the object recognition unit 300 cooperate with each other to constitute an image processing device. The object candidate detection unit 200 extracts feature amounts for object candidate detection from the normal image captured by the multiple exposure camera 100 so as to detect object candidates. The object recognition unit 300 determines whether or not the dark object-oriented image 120 having different exposure conditions is a recognition target needing confirmation, toward the object candidate detected by the object candidate detection unit 200. In a case where the dark object-oriented image 120 is a recognition target needing confirmation, feature amounts for identification are individually extracted from the normal image 110 and the dark object-oriented image 120. Thereafter, individual feature amounts for identification are integrated with each other to perform object type identification.

Alternatively, even without the use of a multiple exposure image, it is allowable to use an 8-bit normal image and an 8-bit dark object-oriented image generated for image processing in which an image captured with high dynamic range and high tone such as 16-bit is processed with normal tone such as 8-bit to reduce the processing load, as images to be used for multiple exposure. In addition, it is also possible to utilize, in a similar manner, two images, namely, an image generated by adjusting to normal brightness with increased gain and an image tuned for a dark object at the stage of analog values, as images to be used for double exposure so as to achieve the effect of the present example. Note that, when two images are generated from data captured at the same time and image recognition is performed, there is no need to correct movement of an object due to being captured at different times since the images are two images captured at the same time.

The alarm control unit 400 performs an alarm and control on the basis of the object type recognition result obtained by the object recognition unit 300 and the behavior of the own vehicle. In particular, in a case where the object type can be determined as a moving object such as a pedestrian, the alarm and control different from those of the stationary three-dimensional object such as a road sign or a utility pole are performed. When the object is a stationary three-dimensional object, the alarm and control are not carried out until the last minute in the setting since it is assumed that the vehicle quickly passes in the vicinity of the object. In another case where the object is a moving object such as a pedestrian, the vehicle often passes by in low speed or avoids the object because the vehicle might suddenly start moving or change the moving direction even when it is stationary. Accordingly, an appropriate alarm and control corresponding to the object type are implemented, such as raising a relatively early alarm or controlling to suppress speed.

### <FIG. 2 Outline of object candidate detection unit>

FIG. 2 is a diagram illustrating a configuration of the object candidate detection unit.

The object candidate detection unit 200 executes preprocessing of feature amount extraction for detecting an object candidate from a normal image. The object candidate detection unit 200 includes an edge extraction unit 210, a flow generation unit 220, an object candidate extraction unit 230, and a geometric calculation unit 240. The edge extraction unit 210 executes a Sobel filter that responds to a luminance change in the horizontal direction on the image and calculates a vertical edge and its edge intensity from the normal image. Next, the flow generation unit 220 extracts a flow from an entire screen of the normal image so as to generate a flow image for moving object detection, in which the movement amount of the background changing in accordance with the own vehicle behavior is deleted. In addition, a flow image presumed to be not including the moving object is also generated.

Using the vertical edge image generated by the edge extraction unit 210, the object candidate extraction unit 230 extracts a three-dimensional object that often exists perpendicularly to the road surface as an object candidate. Since color tone change occurs at a boundary between the background and the three-dimensional object in many cases, the luminance change with the background occurs twice when the three-dimensional object is viewed in the horizontal direction on the image. Accordingly, presence or absence of an edge in the horizontal direction is searched, and when an edge is present, a pair of vertical edges to be paired with the vertical edges is searched for.

For example, when a three-dimensional object such as a person or a utility pole exists, after a vertical edge is found in scanning in the horizontal direction, further search is made as to whether or not there is a pair for the found pair. With application of vertical direction processing entirely for the scans in the horizontal direction, a pair of vertical edges can be found to exist in a horizontal position on a same image in the case of a three-dimensional object, and this information is utilized to detect a three-dimensional object and extract as an object candidate.

Next, in order to judge whether or not the three-dimensional object is a moving object, search is performed for a region including dense collection of flows as an aggregate in a flow image for moving object detection in which the movement of the background is deleted for the moving object. When the flow is dense and the direction and speed of the flow are equal in the region, the aggregate is extracted as one moving object. Furthermore, a flow image generated so as not to include the moving object includes a flow assumed to have changed in accordance with a movement amount of the own vehicle. Accordingly, a rough three-dimensional shape is restored from the movement amount of the own vehicle and the movement of the flow, and a chunk as a three-dimensional object is extracted as an object candidate from the restored image.

Next, the geometric calculation unit 240 calculates a three-dimensional position, posture, size, etc. for the object candidate extracted by individual methods. While the posture, size, or the like of the three-dimensional object candidate may have already been obtained in the object candidate extraction unit 230 of the flow, three-dimensional position, posture, size, etc. are further calculated by narrowing down to individual recognition targets. In recalculation of the three-dimensional position, it is allowable to obtain a three-dimensional position calculated on the basis of a lower end position of the extracted three-dimensional object on the road surface.

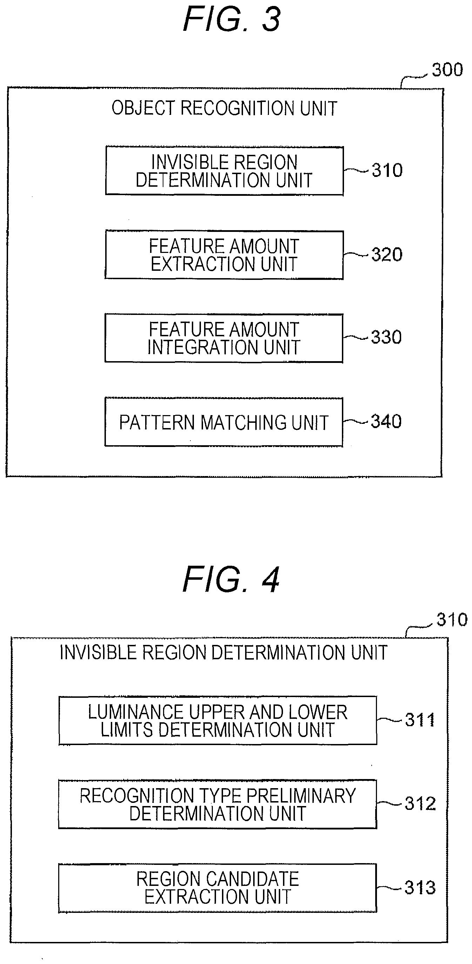

### <FIG. 3 Outline of object recognition unit>

FIG. 3 is a diagram illustrating a configuration of the object recognition unit.

The object recognition unit 300 includes an invisible region determination unit 310, a feature amount extraction unit 320, a feature amount integration unit 330, and a pattern matching unit 340.

The invisible region determination unit 310 analyzes the luminance of the normal image 110 to determine whether or not the object candidate detected by the object candidate detection unit 200 is a recognition target needing confirmation of the dark object-oriented image 120. The invisible region determination unit 310 determines whether or not there is an object candidate partially extending over an irradiation range of a headlight of the own vehicle. In a case where a part of an object is unrecognizable due to the darkness of the normal image 110, that is, only a part of an object is visible on the normal image 110 and only a part is extracted as an object candidate, the invisible region determination unit 310 determines that the object candidate is a recognition target needing confirmation of the dark object-oriented image 120.

In addition, in a case where it is too bright for a dark object-oriented image and thus a part of the object is unrecognizable depending on the light source environment and the recognition target, it is also allowable to configure to extract only a part of the dark object-oriented image as an object candidate. In such a case, it is allowable to adopt a configuration to judge that this is a recognition target that needs complementation of information for a region that is too bright for the dark object-oriented image and has blown out highlights, with a normal image.

The feature amount extraction unit 320 uses the dark object-oriented image 120 and the normal image 110 in combination to extract feature amounts for identifying an entire shape of the object candidate and identifying whether it is a person or a vehicle.

That is, in a case where it is determined by the invisible region determination unit 310 that the object candidate is the recognition target needing confirmation of the dark object-oriented image 120, the feature amount extraction unit 320 extracts feature amounts for object identification from each of the normal image 110 and the dark object-oriented image 120. For example, in a case where the invisible region determination unit 310 determines that there is a dark portion (invisible region) of an object that is difficult to visually recognize due to blocked up shadows in the normal image 110, the feature amount extraction unit 320 extracts feature amounts for the dark portion by using the dark object-oriented image 120. In contrast, as for a portion (visible region) of an object visible on the normal image 110, the feature amount of that portion is extracted by using the normal image 110.

Similarly, in a situation where it is difficult to recognize the object in a dark object-oriented image due to blown out highlights, it is allowable to utilize a normal image obtained by capturing a brighter object.

The feature amount integration unit 330 utilizes the feature amount extracted from each of the normal image 110 and the dark object-oriented image 120 by the feature amount extraction unit 320 to select the feature amount of the image having higher visibility, and combines feature amounts from both the normal image 110 and the dark object-oriented image 120 with each other. With combined use of the feature amounts obtained by utilizing two images captured under different exposure conditions in pattern matching performed in the pattern matching unit 340, it is possible to recognize the object with higher reliability and accuracy even when it is dark and a part of the object is difficult to view. Likewise, even in a situation where a part of an object is difficult to see due to blown out highlights, similar effects can be obtained by acquiring and combining feature amounts from darker images, as opposed to this.

In the example illustrated in FIG. 1, two exposure images of the normal image 110 and the dark object-oriented image 120 are alternately photographed periodically as illustrated in FIG. 8. Alternatively, however, it is allowable to add a configuration for acquiring a bright object-oriented image for viewing an object brighter than a normal image in this period. For example, the bright object-oriented image, the normal image 110, and the dark object-oriented image 120 may be captured in order. A bright object-oriented image is an image in which a bright portion is made darker and a dark portion is made further darker. Therefore, in a case where there is a bright partial region of an object which is difficult to visually recognize due to blown out highlights in a normal image, it is possible to extract the feature amount of that portion by using the bright object-oriented image. Therefore, it is possible to improve the recognition accuracy with a combined use of feature amounts extracted from images of appropriate exposure conditions for each of partial regions of the object.

### <FIG. 4 Outline of invisible region determination unit>

FIG. 4 is a diagram illustrating a configuration of the invisible region determination unit.

The invisible region determination unit 310 checks the object candidate detected by the object candidate detection unit 200 as to whether or not the object is too bright in part and has blown out highlights, or whether or not it is too dark and has blocked up shadows. In other words, the invisible region determination unit 310 checks that only a part of the object is captured as an object candidate due to the influence of light source environment, and the remaining part of the object is too bright and has blown out highlights, or it is too dark and has blocked up shadows on the image. The invisible region determination unit 310 includes a luminance upper and lower limits determination unit 311, a recognition type preliminary determination unit 312, and a region candidate extraction unit 313.

The luminance upper and lower limits determination unit 311 analyzes on-image surrounding luminance information regarding the object candidate and checks whether or not on-image surrounding luminance of the object candidate has reached the vicinity of the upper or lower limit. The state in which the surrounding luminance of the object candidate has reached the vicinity of the upper and lower limits is a state where the luminance is within a luminance upper and lower limit ranges, more specifically, the luminance is within a predetermined luminance lower limit range or a predetermined luminance upper limit range. For example, the luminance lower limit range may be set to a fixed luminance value (0 to 10) of 10 or less in 8-bit luminance values, while the luminance upper limit range may be set to a fixed luminance value (245 to 255) of 245 or more in 8-bit luminance values.

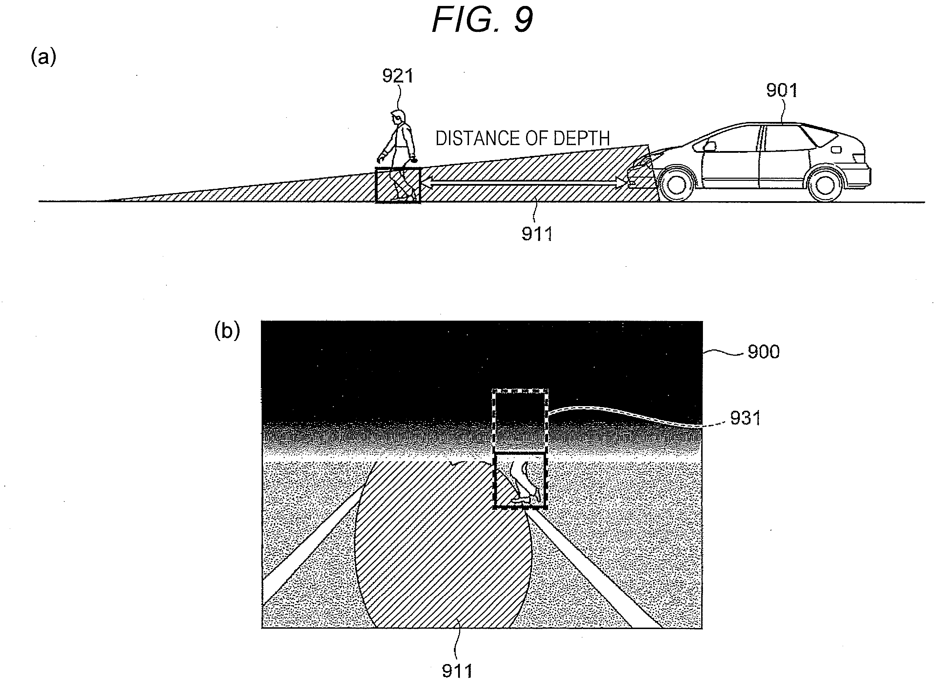

FIG. 9(a) is a diagram illustrating a situation in which a night pedestrian is imaged, and FIG. 9(b) is a schematic diagram of a captured image in the situation in FIG. 9(a). In the nighttime, as illustrated in an example of a captured image 900 in FIG. 9(b), an invisible region emerges outside a headlight irradiation region 911 comparatively frequently.

For example, when a pedestrian 921 comes into the headlight irradiation region 911 together with forward traveling of the own vehicle 901, often there are cases where the feet of the pedestrian 921 are illuminated with headlight with high intensity while the upper body of the pedestrian 921 is not illuminated with the headlight. In a case where the camera is an in-vehicle front camera, exposure corresponding to the headlight irradiation region 911 as a high collision risk region is basically performed. Accordingly, the normal image 900 in a case where a pedestrian 921 is present is an image in which bright feet are visually recognized and the head is dark as illustrated in FIG. 9(b), leading to detection of the lower body of the pedestrian 921 as a three-dimensional object.

At the time of irradiation of the headlight of the own vehicle at night, it is determined as further confirmation whether the boundary of the inner and outer position of the irradiation range according to a positional relationship between the headlight irradiation range and the vertical three-dimensional object is appropriate. Confirmation is made by analyzing the relationship between the three-dimensional position of the object candidate and the irradiation range of the headlight of the own vehicle. Specifically, in the case of a pedestrian located 20 meters away, for example, estimation according to preliminary information or learned light distribution pattern of the own vehicle that the headlight illumination would be weaker and darker at a height above 0.8 m from the road surface is compared with the actual analysis result on the image so as to perform reconfirmation.

Recently, there is a headlight in which the light distribution pattern can be varied with manually adjustable upper-lower irradiation angles. For example, in a case where adjustment result information is provided via a CAN or the like, it is possible to dynamically change the light distribution pattern. In a case where the adjustment result information is not provided via the CAN or the like, the trends of the depth and the height of the object candidate from the road surface may be analyzed from the learning results at the nighttime driving. In a case where the surrounding environment is dark and not affected by other light source environment, it is possible with the learning of the depth, angle, and height from the road surface of the own vehicle to perform determination with higher accuracy.

As illustrated in FIG. 9(b), in a case where there is an object candidate (lower body of the pedestrian 921) in the headlight irradiation range at the time of headlight irradiation of the own vehicle at night, the luminance upper and lower limits determination unit 311 judges whether luminance of the upper side of the object candidate is in the vicinity of the lower limit of luminance. Here, a luminance histogram is generated in the vertical direction, and in a case where the luminance of the upper side of the object candidate is in the vicinity of the lower limit and the luminance distribution is such that the luminance gradually decreases in a direction toward the upper side from the object candidate in the luminance histogram, the luminance upper and lower limits determination unit 311 determines that actually the object continuously exists on the upper side with high probability although the upper side of the object candidate is invisible due to blocked up shadows in the normal image 110.

In this manner, for example, in a case where the luminance upper and lower limits determination unit 311 has determined that the lower portion of the three-dimensional object build perpendicular to the road surface is visible in a normal image as an object candidate and that the upper portion of the three-dimensional object is dark and is visually unrecognizable with high probability because it is located outside of the headlight irradiation range, the recognition type preliminary determination unit 312 next narrows down the recognition type on the assumption that an object exists above the three-dimensional object. There is an assumed range of the object whose type is to be recognized by the pattern matching unit 340, whereas obviously small object candidates or obviously large object candidates are to be determined to be out of range and excluded from pattern matching candidates for type recognition.

Here, for example, as illustrated in FIG. 9(b), when processing in a case where a three-dimensional object having a width of 0.7 m and a height of 0.8 m is in a view at a distance of 20 m is presumed, the object is obviously thinner in comparison with a vehicle as a pattern matching type that the object and thus judged not a vehicle candidate, and then, processing is continued with the possibility of being a pedestrian, a two-wheeled vehicle, or an animal. Next, on the presumption that the object in the view seems to be the lower body of the pedestrian 921, the region candidate extraction unit 313 sets, on the image, a pedestrian candidate frame 931 in a range a little larger than standard size 170 cm of the pedestrian 921 as a basis.

In this case, it is sufficient that the frame be set above the object candidate on an upper portion on the image when both the own vehicle and the object candidate are stationary. However, in a case where the own vehicle is moving or the object candidate is also moving, it is necessary to predict the time of the frame interval to be imaged under different exposure conditions and predict the movements of the own vehicle and the object candidate in order to estimate the position on the image photographed at different time timings as illustrated in FIG. 8. For this reason, the position of the object during the processing time of 33 msec after one frame is to be predicted.

The region candidate extraction unit 313 estimates a three-dimensional position of the object candidate at the time of capturing the dark object-oriented image and further estimates the region of the position on the image, on the basis of the moving speed of the own vehicle toward the object candidate and the moving speed of the object candidate. When other possibilities remain in the determination made by the recognition type preliminary determination unit 312 for the target, the region candidate extraction unit 313 executes extraction of region candidate similarly to the example of the pedestrian.

Depending on the cases, it is allowable to perform detection of an object candidate not only on the normal image 110 but also on the dark object-oriented image 120, and, by the invisible region determination unit 310 of the object recognition unit 300, judge the possibility that these extracted object candidates are the same object.

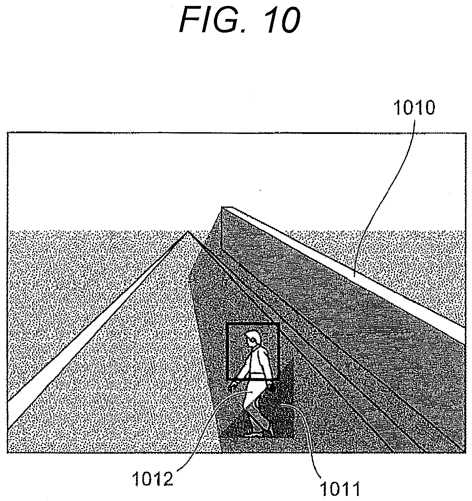

### <Case of FIG. 10>

Next, a case where it is difficult to judge which part of the object is an invisible region as in the case of FIG. 10 will be described. FIG. 10 illustrates a captured image in a state where the upper body of the pedestrian is in the sun and the lower body is in the shade.

In the example illustrated in FIG. 10, a shadow 1011 formed by a wall 1010 build along the right lane in the daytime shadows only the feet of a pedestrian 1012. The upper body of the pedestrian 1012 is bright and the lower body is dark in the shadow 1011. Depending on the adjustment condition of the exposure, this is a case where only the upper body of the pedestrian 1012 is seen with high visibility on the normal image while the lower body is not seen well with blocked up shadows.

In such a case, the object candidate detection unit 200 first extracts an object candidate from the normal image 110. With this extraction, the upper body in the sun can be detected as a three-dimensional object. Next, the invisible region determination unit 310 of the object recognition unit 300 determines whether or not the object candidate is in a state where a part of the object is not seen well. The luminance upper and lower limits determination unit 311 of the invisible region determination unit 310 analyzes the luminance distribution around the object candidate and determines whether or not the luminance distribution is close to the luminance upper and lower limits.

In the example illustrated in FIG. 10, while depending on the range to be analyzed, analysis can be made such that the positions in the left direction of the pedestrian 1012 is bright, leading to high visibility on the image, while positions in three directions, namely, upper, lower and right, of the pedestrian 1012 are dark, leading to low visibility on the image.

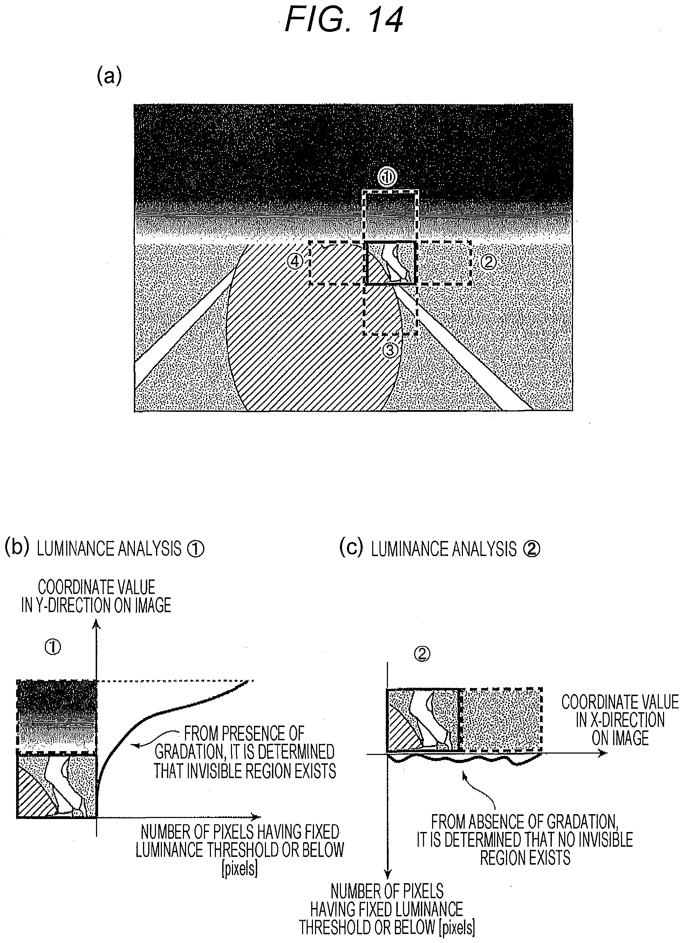

FIG. 14 is a diagram illustrating a method of determining an invisible region around an object candidate. The luminance upper and lower limits determination unit 311 analyzes the luminance distributions of upper, lower, right and left of the object candidate in the normal image 110, and determines whether or not the luminance distribution is close to the luminance upper and lower limits. As illustrated in a luminance analysis plan (1) of FIG. 14, the vertical luminance analysis may also be performed at nighttime own vehicle headlight illumination to confirm that there is an invisible region in the vertical direction of the object candidate. In addition, even at the time of irradiation of the own vehicle headlight at night, there are also cases where the light source environment changes in the left and right directions of the object candidate due to the influence of the vehicle light or the like. Accordingly, it is allowable to apply this together to improve accuracy in judging whether or not the object candidate is an object holding an invisible region.

As illustrated in FIG. 14, the analysis of the luminance distribution around the object candidate includes analysis of whether or not the luminance distribution has changed to an extremely dark or bright luminance distribution in the four directions of left, right, top and bottom centered on the object candidate. For example, a fixed luminance value of 10 or less at the 8-bit luminance value is set as a threshold for the dark side, and a fixed luminance value 245 or more at the 8-bit luminance value is set as a threshold for the bright side, the thresholds indicating a boundary beyond which substantially no information of edge and shape feature amount cannot be obtained due to their extremely bright or dark levels, and analysis of the number of pixels exceeding these thresholds is executed. The example illustrated in FIG. 14 seems to observe only the change on the dark side. However, in a configuration including imaging of the bright object-oriented image, analysis is performed here to observe a change on the bright side as well.

As illustrated in FIG. 14(a), the region of the object candidate is expanded in four directions upward, downward, leftward, and rightward, and then, analysis is performed as to whether or not the luminance changes in gradation over the expanded region in the upward direction. As illustrated in the luminance analysis (1) of FIG. 14(b), the region of the object candidate and the expanded region above the object candidate are specifically focused, and then, the number of pixels having the fixed luminance threshold value 10 or less is counted in every horizontal direction. Subsequently, the count values are arranged for each of Y coordinates to form a histogram.

In the example of the luminance analysis (1), it can be judged that the number of pixels having a luminance value of 10 or less on the image increases as moving upward in the upper expanded region in the image and that gradation is applied in stages to the upper part of the image. This leads to a determination that there is a possibility of the presence of an invisible region due to blocked up shadows above the object candidate and that it might be possible to recognize the object in the dark object-oriented image although the upper part of the object is dark and invisible in the normal image.

In the example illustrated in FIG. 10, it can be judged that the number of pixels having a luminance value of 10 or less on the image increases as moving downward in the lower expanded region in the image on the basis of the recognized upper body, and that gradation is applied in stages to the lower part of the image. This leads to a determination that, although it is dark in a diagonal direction, there is a possibility of the presence of an invisible region due to blocked up shadows below the object candidate and that it might be possible to recognize the object in the dark object-oriented image although the lower part of the object is dark and invisible in the normal image.

Similarly, the region of the object candidate and the expanded region on the right side thereof are also analyzed. In luminance analysis (2) illustrated in FIG. 14(c), the number of pixels having a luminance value of 10 or less in the vertical direction is counted. However, there is no change in the light source environment in the horizontal direction, and it is difficult to confirm the change in accordance with the X-direction in the number of pixels at the fixed luminance value or less as illustrated in FIG. 14 (c) .

This indicates that there is no invisible region which cannot be visually recognized by the exposure condition in the horizontal direction of the object candidate and that the shape of the object candidate would not change even viewed on the dark object-oriented image or the like. Likewise, similar processing is performed on the lower side or the left side expanded regions of the object candidate illustrated in FIG. 14(a), and luminance analysis (3) and (4) are performed. When there is a bright object-oriented image, another processing of counting the number of pixels having a fixed luminance of 245 or more is performed again in a similar manner.

In a case where there is an object containing an invisible region, it is difficult to allow the recognition type preliminary determination unit 312 to narrow down candidates for pattern matching, so it is necessary to perform processing assuming all cases. The region candidate extraction unit 313 performs extraction of a region assuming individual candidates. For example, when there is a possibility that the object is either a vehicle or a pedestrian, regions corresponding to each are extracted.

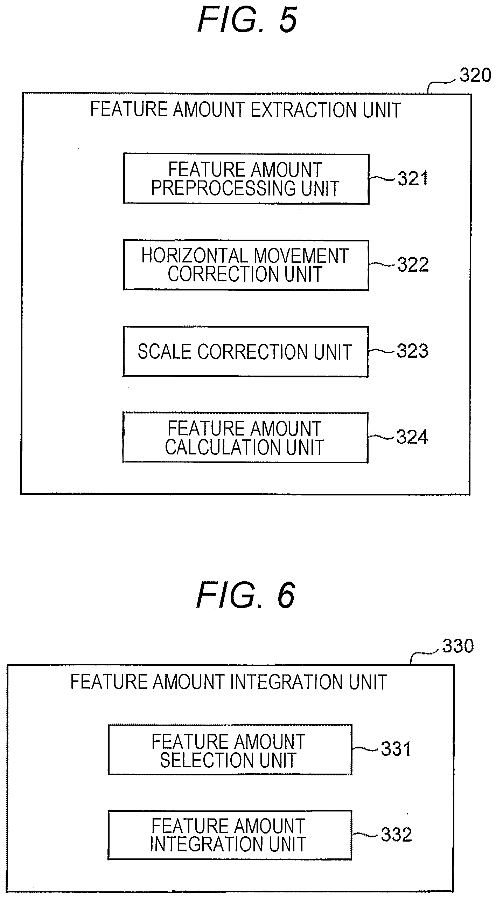

### <FIG. 5 Outline of feature amount extraction unit>

FIG. 5 is a diagram illustrating a configuration of the feature amount extraction unit.

The feature amount extraction unit 320 extracts feature amounts for object recognition from both the normal image 110 and the dark object-oriented image 120. It is already known that the normal image 110 has a part of the object candidate being blocked up shadows and it is highly likely that the part of the object candidate is visible in confirmation in the dark object-oriented image 120.

Accordingly, the feature amount preprocessing unit 321 executes preprocessing for extracting the feature amount within a region candidate on the dark object-oriented image 120 set by the region candidate extraction unit 313 of the invisible region determination unit 310.

In order to confirm whether or not there is an object candidate within the region candidate of the dark object-oriented image 120, the feature amount preprocessing unit 321 first performs feature amount extraction similarly to the edge extraction unit 210 and the flow generation unit 220 of the object candidate detection unit 200.

The region candidate extraction unit 313 confirms that it is the nighttime headlight irradiation as illustrated in FIG. 9 (b), and then extracts a region candidate provided after the position of the object candidate has been set in the region candidate and extracts a region candidate provided in a situation in which it is unclear which part of which object cannot be visually recognized due to blocked up shadows as illustrated in FIG. 10. For this reason, the feature amount preprocessing unit 321 performs feature amount extraction to conform which part of the region candidate contains the object candidate. After edge extraction and flow generation, on the basis of these feature amounts, the size of the region candidate is corrected, or confirmation result that the feature amount does not exist in the region candidate and a part of the object itself is not present rather than the object is invisible is returned, thereby deleting the presence of the region candidate.

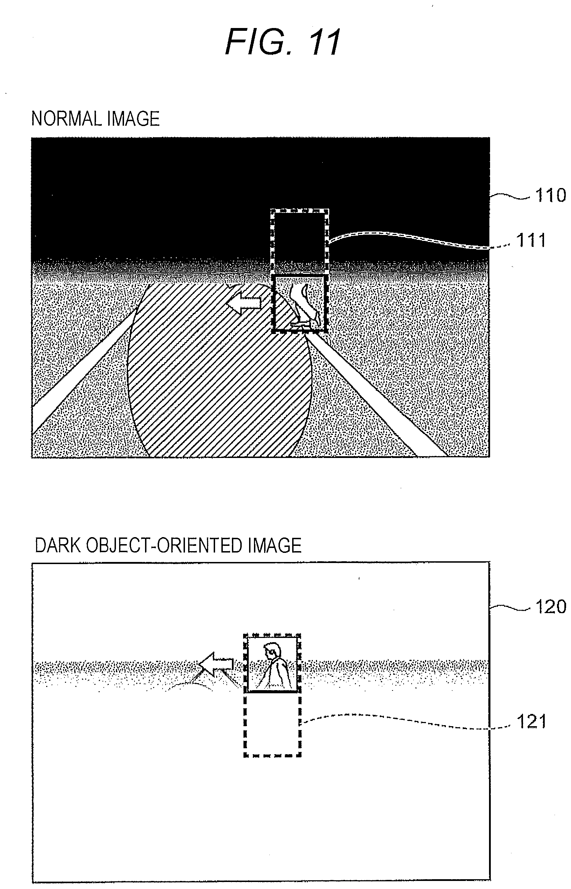

Now, the region containing the feature amount suggesting the presence of an object has been extracted from among the region candidates on the dark object-oriented image. This completes preparation of both the object candidate of the normal image 110 preliminarily extracted and the object candidate of the dark object-oriented image 120. In the example illustrated in FIG. 11, the lower body is detected as a three-dimensional object on the normal image 110, while the upper body is detected as a three-dimensional object on the dark object-oriented image 120. Subsequently, a region 111 of the object candidate is set with the upper side of the lower body as an invisible region in the normal image 110, while a region 121 of the object candidate is set with the lower side of the upper body as an invisible region in the dark object-oriented image 120.

Here is a problem, however, as illustrated in the example of FIG. 8, that images of different exposure conditions are periodically photographed in time series, and thus imaging timings of the two images, namely, the normal image 110 and the dark object-oriented image 120 are different from each other. This means that the target object on the image is moving or being deformed not a little unless the imaging object and the own vehicle are in a stationary state, even though this might be a short period of time. In particular, there are many cases where the movement of the own vehicle is larger than the movement of the target object in the case of an in-vehicle camera, and this leads to deterioration of the recognition performance if this transition on the image is disregarded.

In the present exemplary embodiment, behavior of the own vehicle is predictively calculated all the time from CAN information or the like. The position and movement of the object candidate undergoes correction based on the three-dimensional position and the moving speed of the object candidate calculated by the geometric calculation unit 240 of the object candidate detection unit 200. Naturally, the result of flow extracted by the feature amount preprocessing unit 321 is used to confirm similarity between the horizontal movement amount and the three-dimensional position of the object candidate on the dark object-oriented image 120 and the movement amount of the object candidate on the normal image 110, the movement amount of the candidate found on the dark object-oriented image 120, and the three-dimensional positions of the object candidates, thereby confirming that the objects are the same object with high probability.

After confirmation of similarity, a horizontal movement correction unit 322 and a scale correction unit 323 brings the horizontal movement amount of the object candidate and the size change in the scale direction in agreement. In other words, the horizontal movement correction unit 322 and the scale correction unit 323 correct the horizontal direction movement amount and the size change in the scale direction of the object candidate of the normal image 110 and the object candidate of the dark object-oriented image 120 to bring them into agreement with each other. Since pattern matching is performed with a fixed pattern size even for the object largely captured on the image, determination as to which region is to be formed and a size of the region in preparation of pattern matching is made.

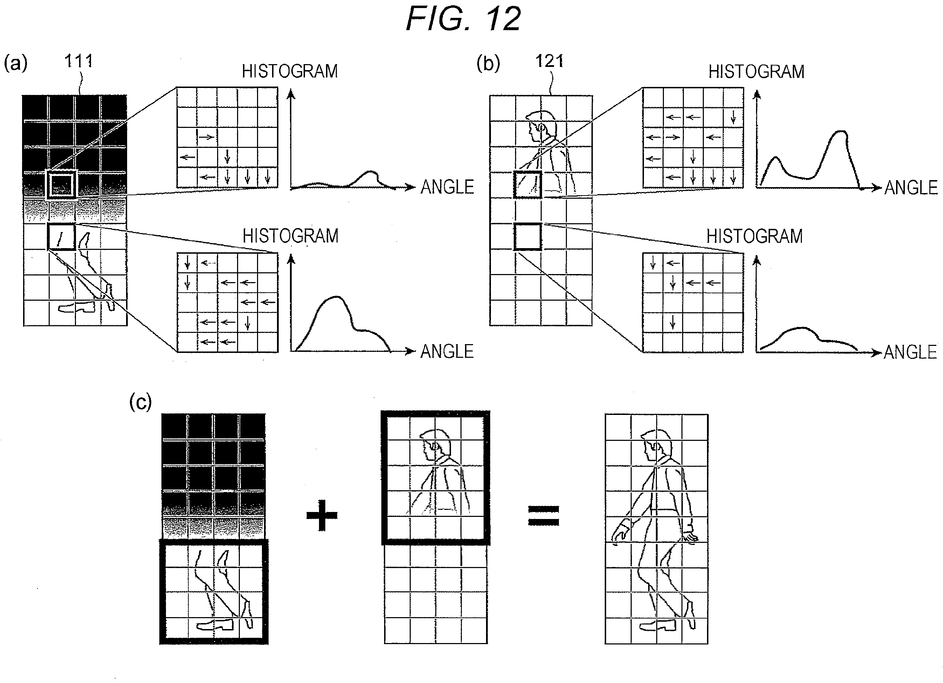

FIG. 12 is a diagram illustrating a method of integrating feature amounts, and illustrates a case of a pedestrian's appearance at night. Here, feature amounts are extracted while the horizontal movement amount and the scale change are being corrected. In determination, large total amount of histogram, high average edge intensity, high horizontal edge intensity, large total amount of horizontal edge (the gradation direction by headlight is omitted), large total amount of edge, and large edge position standard deviation are used as conditions. Using these conditions, it is determined which of the normal image 110 and the dark object-oriented image 120 is to be used for each of local regions. It is determined which of the normal image 110 and the dark object-oriented image 120 is to be used in accordance with a result of an adjacent local region. In this manner, the feature amounts are compared for determination, and an exposure image with a large feature amount is selected for each of the local regions, and these feature amounts are integrated (FIG. 12(c)).

The feature amount calculation unit 324 divides the region into the number of blocks of a predetermined formation size defined for each of identification candidates in the pattern matching, and thereafter feature amounts for pattern matching are extracted from each of the normal image 110 and the dark object-oriented image 120. As illustrated in FIG. 11, object candidate regions 111 and 121 are set for the normal image 110 and the dark object-oriented image 120, respectively. Subsequently, as illustrated in FIGS. 12(a) and 12(b), the object candidate regions 111 and 121 that have been set are each divided into fixed-sized square regions. In the figure, each of the object candidate regions is divided into a square region of 4 × 9 size for pedestrian identification. Alternatively, the division size may be defined in consideration of the size of the farthest pedestrian as a recognition target and recognition performance.

Thereafter, an edge direction histogram of each of pixels corresponding to the local region of the fixed divided region is created. Note that, as illustrated in FIGS. 12(a) and 12(b), when the edge intensity is the fixed intensity or less, voting is not performed on the histogram as an invalid edge. Still, the size of the object varies not only on an image but also varies between the normal image and the dark object-oriented image. Therefore, histogram normalization according to the image size of the local region is performed and this normalized histogram is to be applied. With the use of this histogram, it can be seen that a constant feature amount is extracted irrespective of the size appearing on the image.

However, as illustrated in FIG. 9, during illumination of the headlights at nighttime, roughly the region visible on the normal image 110 and the region easily seen on the dark object-oriented image 120 are known. Therefore, which of the images having different exposure conditions is to be used for object recognition may be determined from the relationship between the depth of the candidate object and the headlight irradiation range. Even in the case as illustrated in FIG. 9, however, it is difficult to judge for each of the local regions, such as which one can achieve higher visibility on the image in a case where the object is present on more specific region or the boundary.

Moreover, in a case where there is a light source other than the own vehicle's headlight, the brightness differs basically between the top and the bottom of the object, and still, in the case illustrated in FIG. 10, for example, the right side of the object becomes slightly brighter because of light applied from another light source. Consequently, by individually judging which image to utilize for each of the upper, lower, right and left local regions to achieve stable pattern matching, it is possible to determine more appropriately which of the feature amount of the exposure image is to be selected.

### <FIG. 6 Feature amount integration unit>

To achieve this, as illustrated in FIGS. 12(a) and 12(b), the feature amount selection unit 331 compares the sums of the histograms of the corresponding local regions. A region in which an edge intensity threshold exceeds a fixed threshold with higher percentage, that is, a local region in which edges are more distinctive can be considered to have captured the shape feature amount of the object candidate on the image. Accordingly, the feature amount selection unit 331 executes this determination for each of the local regions, thereby selecting a feature amount that can achieve visual recognition of the object shape with higher visibility from among the feature amounts of the normal image 110 and the dark object-oriented image 120.

Since the scale of the object candidate appearing in the normal image 110 and the dark object-oriented image 120 might have changed due to factors such as the behavior of the own vehicle, judgment is made in accordance with the proportion of the edge amount within the local region normalized in size. On the basis of the selection condition for each of the local regions, the feature amount integration unit 332 integrates the feature amounts (FIG. 12(c)).

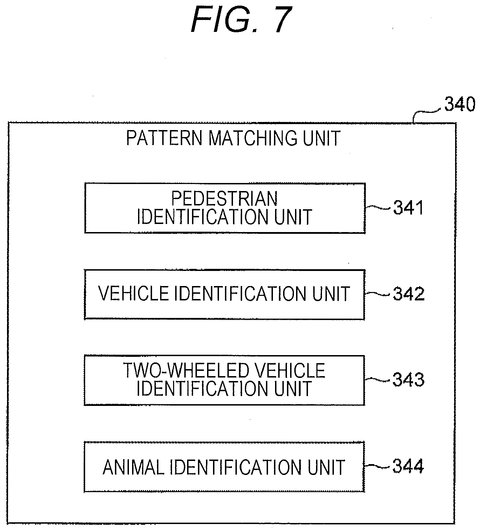

### <FIG. 7 Pattern matching unit>

FIG. 7 is a diagram illustrating a configuration of the pattern matching unit.

Next, pattern matching is performed using the integrated feature amounts. The pattern matching unit 340 integrates feature amounts for identification extracted individually from the normal image 110 and the dark object-oriented image 120 and performs object type identification (object identification unit). The pattern matching unit 340 performs pattern matching on the candidates already narrowed down by the recognition type preliminary determination unit 312. In a case where the recognition type preliminary determination unit 312 determines that the object candidate can be a pedestrian, the pedestrian identification unit 341 compares the object candidate with the already learned pedestrian feature amount to perform identification whether it is a pedestrian or not. Likewise, in a case where the possibility of the type of the object candidate still remains regarding other types, vehicle identification is executed by a vehicle identification unit 342, two-wheeled vehicle identification is executed by a two-wheeled vehicle identification unit 343, and animal identification is performed by an animal identification unit 344. In this manner, in the pattern matching unit discriminates whether or not the object has been learned in advance. Besides this, in order to specify the type, a pattern such as a sign, a light sign, a signal, a road surface marking or the like may be prepared.

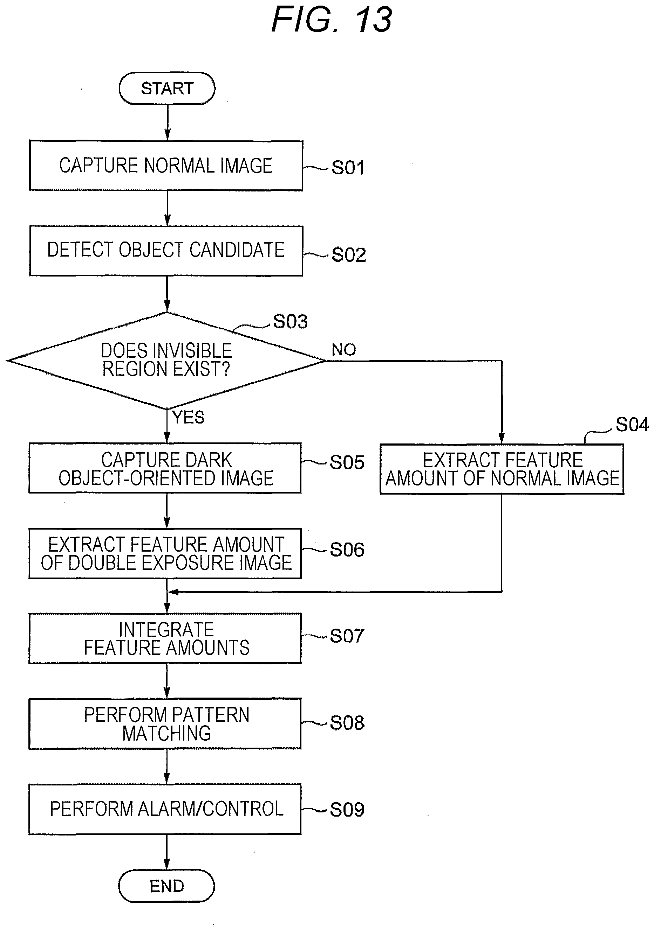

### <FIG. 13 Outline of processing flow>

Next, an overall flow of surrounding environment recognition processing will be described. FIG. 13 is a flowchart illustrating details of the processing. First, an image of a normal exposure condition (normal image) is captured by a camera (S01). Subsequently, an object candidate is detected from the obtained normal image (S02).

Next, it is determined whether or not an invisible region exists (S03). Analysis of the luminance around the object candidate is performed to confirm whether or not the luminance of a part of the object candidate has blown out highlights or blocked up shadows. Here, it is analyzed whether the luminance around the object candidate is dark with blocked up shadows. In a case where blown out highlights are present, the system that has captured the bright object-oriented image is controlled to extract a feature amount from a bright object-oriented image in a similar manner as a dark object so as to improve object identification accuracy and reliability.

In a case where it is determined that the luminance around the object candidate is not low, that is, when determined that there is no invisible region (NO in S03), this means the object candidate has been discriminated as not having low visibility due to darkness on the normal image. For this reason, type specifying processing of which type the object belongs using the normal image alone. Accordingly, feature amount extraction for pattern matching is to be performed using the normal image alone (S04).

In contrast, in a case where it is determined that the luminance around the object candidate is low, that is, when it is determined that there is an invisible region (YES in S03), this means that the object candidate is partially too dark with blocked up shadows on the normal image, suggesting that there is a possibility that the entire object would not be visible using the normal image alone.

In the present exemplary embodiment, as illustrated in FIG. 8, processing from S01 to S04 and pattern matching of object candidates of S08 using only normal images are performed after capturing a normal image. Then, the object determined to have an invisible region in S03 undergoes processing from S05 to S09 after imaging of the dark object-oriented image, as illustrated in FIG. 8. In this manner, processing is executed with distributed processing loads in accordance with the imaging timing, whereby the processing load is efficiently distributed, leading to implementation of highly reliable recognition with high accuracy.

A dark object-oriented image is captured (S05), and recognition processing using this image is started thereafter. In a case where it is confirmed that a part of the object candidate is too dark to view in the normal image, both the imaging result of the normal image 110 and the imaging result of the dark object-oriented image 120 are to be used to extract the feature amount for pattern matching (S06).

Subsequently, the feature amount of the normal image 110 and the feature amount of the dark object-oriented image 120 are integrated (S07). Referring to the example illustrated in FIG. 11, the lower body visible with a large amount of extracted feature amount in the normal image 110 is used together with the upper body imaged in the dark object-oriented image 120 since the upper body was too dark in the normal image 110 to view, so as to extract feature amounts from images in each of which the upper body and lower body are sufficiently visible, respectively, and the extracted feature amounts are then integrated.

Even in a case where the object is not a pedestrian illustrated in FIG. 11, which image should be used is selected depending on how much the edge feature amounts clearly indicating shape features are present on the image. While the present exemplary embodiment mainly describes the dark object-oriented image 120 and the normal image 110, it is also allowable to photograph a bright object-oriented image targeting a high luminance object, select an optimal image including this image, and integrate feature amounts.

Subsequently, pattern matching is performed (S08) using the feature amount integrated in the feature amount integration (S07). Therefore, by utilizing abundant feature amounts obtained by feature amount integration, which would be difficult to be obtained only by images captured under one exposure condition, it is possible to implement highly reliable and highly accurate pattern matching

Subsequently, alarm/control processing is performed (S09). Here, in order to implement an alarm and control, the position, speed or the like of the target object are updated. In a case where an object is detected from only an image with one exposure condition such as a normal image, information regarding the image is used to calculate the position, speed, etc. of the object, so as to perform the alarm, control, or the like. In a case where pattern matching has been performed by acquiring feature values from images of a plurality of exposure conditions such as the normal image 110 and the dark object-oriented image 120, position and speed is also calculated by utilizing these feature amounts, and the alarm and control are implemented on the basis of calculation results of position and speed having higher accuracy.

In this manner, by performing recognition by combining a plurality of different images having mutually different exposure conditions captured with an inexpensive camera having a limited dynamic range in an imaging environment requiring a wide dynamic range such as a nighttime headlight irradiation environment and an environment including a daytime bright region and a shadow region, recognition with higher reliability is implemented in view of the whole object shape. Accordingly, even when a part of one object is dark and the rest is imaged brightly, it is possible to perform accurate recognition as one object, leading to achievement of recognition with higher accuracy and reliability compared with a conventional case where recognition of a pedestrian is performed only by feet images in a case where the upper body is not visible, for example.

### <Case of stereo camera>

The above descriptions are basically exemplary embodiments effective to either monocular processing or stereo processing.

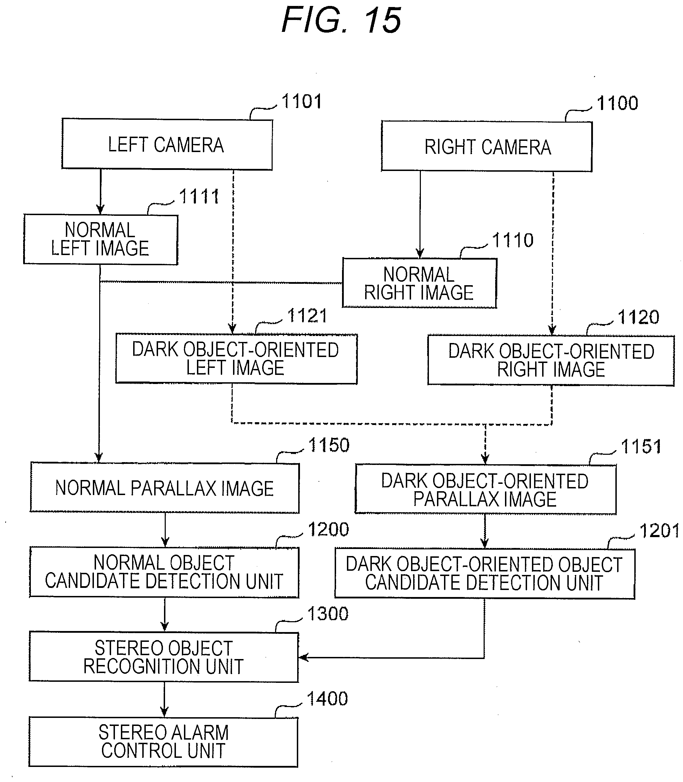

### <FIG. 15 Outline of in-vehicle stereo camera environment recognition device>

FIG. 15 illustrates an example in the case of a stereo camera. FIG. 15 is a diagram illustrating a configuration of an in-vehicle stereo camera environment recognition device. Note that the processing method of this description may have a camera configuration in which only the normal image is captured as right and left stereoscopic images and the right image is captured as a dark object-oriented right image. The above configuration, however, is basically a modification of a mechanism of detecting an object candidate from a parallax image, in which utilization methods of the latter stages are similar. Accordingly, in order to describe processing unique to stereo, this section will describe, as a more differentiated system configuration, an example of capturing both a normal image and a dark object-oriented image with each of right and left cameras of a stereo camera.

As illustrated in FIG. 15, a left camera 1101 alternately captures a normal left image 1111 and a dark object-oriented left image 1121 in time series. Likewise, a right camera 1100 alternately captures a normal right image 1110 and a dark object-oriented right image 1120 in time series. Since stereo matching is performed between the left and right normal images and between the right and left dark object-oriented images, imaging timings of the left and right cameras are synchronized so as to capture the normal images 1111 and 1110 at the same timing, while the dark object oriented images 1121 and 1120 are also captured in left-right synchronism. Using these images, stereo matching is performed to generate parallax images.

The normal left image 1111 and the normal right image 1110 are captured at the same timing, and stereo matching is performed on the captured image to generate a normal parallax image 1150. Similarly, the dark object-oriented left image 1121 and the dark object-oriented right image 1120 for the dark object are imaged at the same timing, and stereo matching is performed on the captured image to generate a dark object-oriented parallax image 1151.

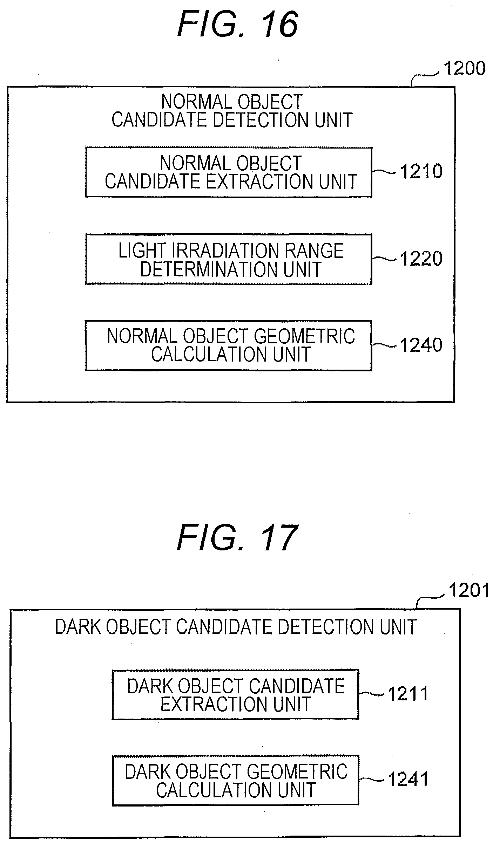

Normal object candidate detection using the normal parallax image 1150 is performed by a normal object candidate detection unit 1200, while dark object-oriented object candidate detection using the dark object-oriented parallax image 1151 is performed by a dark object-oriented object candidate detection unit 1201. A stereo object recognition unit 1300 determines objects that can be the same object originally from the object candidates extracted under different exposure conditions. Details will be described with reference to FIGS. 16 to 18.

For example, in consideration of this taking a pedestrian as an example, if this is a case where the lower body alone is extracted as a three-dimensional object in the case of a normal parallax image whereas the upper body alone is extracted as a three-dimensional object from a dark object-oriented parallax image, each of extracted images would be defined as a three-dimensional object of separate objects and due to the fact that the images are only half-bodies, making it difficult to perform identification as a pedestrian. To handle this problem, the stereo object recognition unit 1300 can judge that two objects can be a same object, and further perform identification based on the integrated feature amount, so as to finally specify that the two candidate objects are part of a pedestrian and that this is a single object.

On the basis of this result, a stereo alarm control 1400 performs alarm control in consideration of the behavior of the own vehicle from the type, the three-dimensional position, posture, and speed of the candidate object.

FIG. 16 illustrates the normal object candidate detection unit 1200. From the normal parallax image 1150, an object candidate is detected by the normal object candidate detection unit 1200. In a situation illustrated in FIG. 9(a), with the use of the stereo camera, a normal parallax image is generated from the left and right normal images, and the lower body alone is extracted from the normal parallax image as an object candidate by the normal object candidate extraction unit 1210. Next, the normal object geometric calculation unit 1240 estimates an accurate three-dimensional position using a depth and a horizontal position calculated from the parallax image, and also estimates the moving speed from the time-series information. Determination is made as to whether or not the height of the object candidate viewed from the road surface is in the vicinity of the boundary of the headlight irradiation range with respect to the object depth as illustrated in FIG. 9(a), thereby confirming the possibility that the upper side of the object candidate is too dark and invisible at the light irradiation range determination unit 1220.

FIG. 17 illustrates the dark object candidate detection unit 1201. From the dark object-oriented parallax image 1151, an object candidate is detected by the dark object candidate detection unit 1201. In the situation as illustrated in FIG. 9, the dark object-oriented image is formed as an image in which the headlight irradiation region has blown out highlights while as opposed to this, the shape of the object can be easily confirmed in relatively high brightness outside the headlight irradiation range, as illustrated in the right side of FIG. 8. A dark object-oriented parallax image is generated from these left and right dark object-oriented images and the upper body alone is extracted as an object candidate from the dark object-oriented parallax image by a dark object candidate extraction unit 1211. Similarly, the dark object geometric calculation unit 1241 of the extracted three-dimensional object estimates the three-dimensional depth, the horizontal position, and the moving speed from the dark object-oriented parallax image.

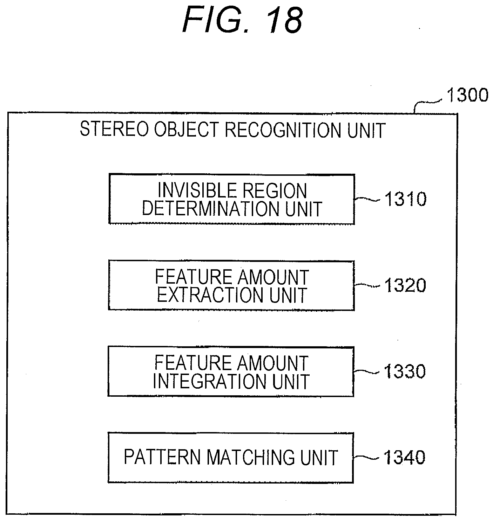

The stereo object recognition unit 1300 illustrated in FIG. 18 analyzes the luminance around the object candidate extracted from each of the parallax images to confirm the invisible region around the object candidate. In the case of scene illustrated in FIG. 11, similar vision is created in the case of a stereo camera.

From the stereoscopic view in the normal image of normal exposure, the feet are detected as a three-dimensional object, and the invisible region comes on the upper side of the object candidate. On the contrary, the upper body is detected as a three-dimensional object from the stereo vision in the dark object-oriented image obtained by dark object-oriented exposure, while the lower side of the object candidate is determined as an invisible region. There is a dark object candidate extracted from the image for the left and right dark object-oriented image in the invisible region of the normal object candidate extracted from the left and right normal image, while a normal object candidate extracted from the left and right normal images exists in the invisible region of the dark object candidate. This suggests high possibility of the two candidates being one three-dimensional object.

However, there is a possibility that two objects accidentally exist close to each other on the image. In consideration of this, not only equality of the depth and the horizontal position and but also equality of the moving speed of the two objects is checked to determine whether or not the two are the same object. In a case where neither the own vehicle nor the target object is in the stationary state, the time difference of the imaging timing, the moving speed of the object, and the behavior of the own vehicle are taken into consideration to confirm that the two objects are the same object since object candidates are extracted from images obtained at different imaging timings. This leads to determination by an invisible region determination unit 1310 that two objects candidates, namely, both the dark object candidate and the normal object candidate are part of one three-dimensional object. Thereafter, a feature amount extraction unit 1320 extracts, similarly to a monocular camera, feature amounts from the right images of the normal image and the dark object-oriented image, then a feature amount integration unit 1330 integrates the extracted feature amounts, and a pattern matching unit 1340 executes pattern matching so as to specify the type to be utilized as a criterion for alarm and vehicle control corresponding to the type.

While it is allowable as described above to perform separate processing for each of candidate objects, it is also possible, for example, to combine images from the dark object-oriented image on the basis of the normal object image on the assumption of how the object appears in the frame of the normal object image. For example, in a limited case where the front of an object basically faces the own vehicle like a sign detection and where the own vehicle is going straight ahead, it is possible to predict that the sign will increase its size in the view with a vanishing point as the center.

Even in a light source environment having difficulty in capturing the shape of an entire object with a single exposure condition alone, it is still possible to use images all together taken under different exposure conditions in time series to mutually complement the object shapes so as to extract the whole shape, making it possible to enhance identification performance of the object type, even with a camera with a limited dynamic range. This makes it possible to more appropriately operate the alarm and vehicle control for preventive safety and automatic driving, which are adjusted in accordance with the type of the object.

While the example described above is a case of the stereo camera having the left and right cameras, the technology can also be applied to a stereo camera having a pair of upper and lower cameras.

### Reference Signs List

- 100: multiple exposure camera
- 110: normal image (first image)
- 120: dark object-oriented image (second image)
- 200: object candidate detection unit
- 210: edge extraction unit
- 220: flow generation unit
- 230: object candidate extraction unit
- 240: geometric calculation unit
- 300: object recognition unit
- 310: invisible region determination unit
- 311: luminance upper and lower limits determination unit
- 312: recognition type preliminary determination unit
- 313: region candidate extraction unit
- 320: feature amount extraction unit
- 321: feature amount preprocessing unit
- 322: horizontal movement correction unit (horizontal movement amount correction means)
- 323: scale correction unit (scale correction means)
- 324: feature amount calculation unit
- 330: feature amount integration unit
- 331: feature amount selection unit
- 332: feature amount integration unit
- 340: pattern matching unit
- 341: pedestrian identification
- 342: vehicle identification
- 343: two-wheeled vehicle identification
- 344: animal identification
- 400: alarm control
- 1101: left camera
- 1100: right camera
- 1111: normal left image
- 1110: normal right image
- 1121: dark object-oriented left image
- 1120: dark object-oriented right image
- 1150: normal parallax image
- 1151: dark object-oriented parallax image
- 1200: normal object candidate detection unit
- 1201: dark object candidate detection unit
- 1300: stereo object recognition unit
- 1400: stereo alarm control unit

## Claims

1. An image processing device comprising:
an image acquisition unit (100) for acquiring a first image (110) and a second image (120) having mutually different exposure conditions,
an object candidate detection unit (200) for detecting an object candidate from the first image (110), and
an object recognition unit (300) for recognizing an object from the second image (120) having mutually different exposure conditions relative to a plurality of partial regions within an image region that corresponds to the object candidate, wherein
the image processing device is further comprising:
a determination unit configured to determine whether or not the object candidate is a recognition target needing confirmation of the second image (120),
a feature amount extraction unit (320) configured to extract feature amounts for identification individually from the first image (110) and the second image (120) in a case where it is determined that the object candidate is a recognition target needing confirmation of the second image (120), and
an object identification unit (340) configured to integrate the feature amounts for identification individually extracted from the first image (110) and the second image (120) to perform identification of an object type of the object candidate,
**characterized in that**:
in a case where a luminance distribution around the object candidate in the first image (110) is analyzed and confirmed as a predetermined luminance distribution, the determination unit is configured to determine that the object candidate is a recognition target needing confirmation of the second image (120), wherein the determination unit includes:
a luminance upper and lower limits determination unit (311) for determining whether or not the luminance around the object candidate in the first image (110) is within preset upper and lower limit ranges,
a recognition type preliminary determination unit (312) for narrowing down the object types of the object candidate in a case where it is determined that the luminance around the object candidate falls within the preset upper and lower limit ranges, and
a region candidate extraction unit (313) for extracting a region candidates with respect to a result of narrowing down the object type of the object candidate.

2. The image processing device according to claim 1, wherein
a third image to be used for each of the partial regions is determined with respect to an irradiation range of a headlight of an own vehicle.

3. The image processing device according to claim 2, further comprising:
a determination unit for determining whether or not there is an object candidate that exists partially over the irradiation range of the headlight of the own vehicle, wherein
the object candidate detection unit (200) is configured to recognize the object candidate from the first image (110) and the second image (120) having different exposure conditions in a case where the object candidate exists partially over the irradiation range of the headlight of the own vehicle.

4. The image processing device according to claim 3, wherein
the determination unit is configured to determine that the object candidate exists partially over the irradiation range of the headlight of the own vehicle in a case where gradation of luminance is detected by an image histogram.

5. The image processing device according to claim 1, wherein
the image processing device is configured to be used for a stereo camera that captures images with different exposure conditions in time series, wherein
the object candidate detection unit (200) is configured to extract an object candidate from left and right images simultaneously captured under a first exposure condition by left and right cameras, and
to extract an object candidate from left and right images simultaneously captured under a second exposure condition by the left and right cameras, and
the object recognition unit (300) is configured to determine whether or not the object candidates extracted with respect to the different exposure conditions are a same object, and to specify a type of the object in a case where the object candidates have been determined as the same object.

6. The image processing device according to claim 5, wherein
the image processing device is configured to execute determination whether or not the object candidates are the same object with respect to luminance information regarding the object candidate and on the basis of similarity of any one or more conditions of depth, moving speed, and object size, of the object candidates.

7. The image processing device according to claim 1, wherein
the feature amount extraction unit (320) includes:
a horizontal movement amount correction means (322) for correcting a horizontal movement amount of the object candidate in the first image (110) and the second image (120), and
a scale correction means (323) for correcting a size of the object candidate in a scale direction in the first image (110) and the second image (120).

8. The image processing device according to claim 1, wherein
the image acquisition unit (100) is configured to acquire the first image (110) and the second image (120) at nighttime headlight irradiation, and
the luminance upper and lower limits determination unit (311) is configured to determine that an object exists continuously on an upper side of the object candidate in a case where the upper side of the object candidate is within a preset luminance lower limit range in the first image (110) and where the luminance gradually decreases in a direction of transition from the object candidate to the upper side.

9. The image processing device according to claim 1, wherein,
in a case where, in the first image (110),
there are expanded regions obtained by expanding a region of the object candidate in four directions of upward, downward, rightward and leftward and where there is an expanded region among the expanded regions formed in the four directions, in which the luminance is within the preset luminance lower limit range and the luminance gradually decreases as spacing away from the object candidate, the luminance upper and lower limits determination unit determines that an object is continuously present in the expanded region.

## Patentansprüche

1. Bildverarbeitungsvorrichtung, die umfasst:
eine Bilderfassungseinheit (100) zum Erfassen eines ersten Bildes (110) und eines zweiten Bildes (120) mit jeweiligen verschiedenen Belichtungsbedingungen,
eine Objektkandidatendetektionseinheit (200) zum Detektieren eines Objektkandidaten aus dem ersten Bild (110) und
eine Objekterkennungseinheit (300) zum Erkennen eines Objekts aus dem zweiten Bild (120) mit jeweiligen verschiedenen Belichtungsbedingungen in Bezug auf mehrere Teilbereiche innerhalb eines Bildbereichs, der dem Objektkandidaten entspricht, wobei
die Bildverarbeitungsvorrichtung ferner umfasst:
eine Bestimmungseinheit, die konfiguriert ist, zu bestimmen, ob der Objektkandidat ein Erkennungsziel ist, das eine Bestätigung des zweiten Bildes (120) benötigt, oder nicht,
eine Merkmalsbetragsextraktionseinheit (320), die konfiguriert ist, Merkmalsbeträge für eine Identifizierung individuell aus dem ersten Bild (110) und dem zweiten Bild (120) zu extrahieren, falls bestimmt wird, dass der Objektkandidat ein Erkennungsziel ist, das eine Bestätigung des zweiten Bildes (120) benötigt, und
eine Objektidentifizierungseinheit (340), die konfiguriert ist, die Merkmalsbeträge für eine Identifizierung, die individuell aus dem ersten Bild (110) und dem zweiten Bild (120) extrahiert wurden, zu integrieren, um eine Identifizierung eines Objekttyps des Objektkandidaten auszuführen,
**dadurch gekennzeichnet, dass**:
dann, wenn eine Luminanzverteilung um den Objektkandidaten in dem ersten Bild (110) analysiert wird und als eine vorgegebene Luminanzverteilung bestätigt wird, die Bestimmungseinheit konfiguriert ist, zu bestimmen, dass der Objektkandidat ein Erkennungsziel ist, das eine Bestätigung des zweiten Bildes (120) benötigt, wobei die Bestimmungseinheit enthält:
eine Einheit zur Bestimmung einer oberen und unteren Grenze der Luminanz (311) zum Bestimmen, ob die Luminanz um den Objektkandidaten in dem ersten Bild (110) innerhalb eines voreingestellten oberen und unteren Grenzbereichs ist oder nicht,
eine Einheit zur vorläufigen Bestimmung eines Erkennungstyps (312), um die Objekttypen des Objektkandidaten einzugrenzen, falls bestimmt wird, dass die Luminanz um den Objektkandidaten innerhalb des oberen und unteren Grenzbereichs fällt, und
eine Bereichskandidatenextraktionseinheit (313) zum Extrahieren eines Bereichskandidaten in Bezug auf ein Ergebnis des Eingrenzens des Objekttyps des Objektkandidaten.

2. Bildverarbeitungsvorrichtung nach Anspruch 1, wobei
ein drittes Bild, das für jeden der Teilbereiche zu verwenden ist, in Bezug auf einen Bestrahlungsbereich eines Scheinwerferlichts eines eigenen Fahrzeugs bestimmt wird.

3. Bildverarbeitungsvorrichtung nach Anspruch 2, die ferner umfasst:
eine Bestimmungseinheit zum Bestimmen, ob es einen Objektkandidaten gibt oder nicht, der teilweise über den Bestrahlungsbereich des Scheinwerferlichts des eigenen Fahrzeugs vorhanden ist, wobei
die Objektkandidatendetektionseinheit (200) konfiguriert ist, den Objektkandidaten aus dem ersten Bild (110) und dem zweiten Bild (120), die verschiedene Belichtungsbedingungen haben, zu erkennen, falls der Objektkandidat teilweise über den Bestrahlungsbereich des Scheinwerferlichts des eigenen Fahrzeugs vorhanden ist.

4. Bildverarbeitungsvorrichtung nach Anspruch 3, wobei
die Bestimmungseinheit konfiguriert ist, zu bestimmen, dass der Objektkandidat teilweise über den Bestrahlungsbereich des Scheinwerferlichts des eigenen Fahrzeugs vorhanden ist, falls eine Abstufung der Luminanz durch ein Bildhistogramm detektiert wird.

5. Bildverarbeitungsvorrichtung nach Anspruch 1, wobei
die Bildverarbeitungsvorrichtung konfiguriert ist, für eine Stereokamera verwendet zu werden, die Bilder mit verschiedenen Belichtungsbedingungen in Zeitreihen aufnimmt, wobei
die Objektkandidatendetektionseinheit (200) konfiguriert ist, einen Objektkandidaten aus einem linken und einem rechten Bild, die gleichzeitig unter einer ersten Belichtungsbedingung durch eine linke und eine rechte Kamera aufgenommen wurden, zu extrahieren, und
einen Objektkandidaten aus einem linken und einem rechten Bild, die gleichzeitig unter einer zweiten Belichtungsbedingung durch die linke und die rechte Kamera aufgenommen wurden, zu extrahieren, und
die Objekterkennungseinheit (300) konfiguriert ist, zu bestimmen, ob Objektkandidaten, die in Bezug auf die verschiedenen Belichtungsbedingungen extrahiert wurden, dasselbe Objekt sind oder nicht, und einen Typ des Objekts zu spezifizieren, falls die Objektkandidaten als dasselbe Objekt bestimmt wurden.

6. Bildverarbeitungsvorrichtung nach Anspruch 5, wobei
die Bildverarbeitungsvorrichtung konfiguriert ist, in Bezug auf Luminanzinformationen bezüglich des Objektkandidaten und anhand einer Ähnlichkeit einer oder mehrerer Bedingungen von Tiefe, Bewegungsgeschwindigkeit und Objektgröße der Objektkandidaten eine Bestimmung auszuführen, ob die Objektkandidaten dasselbe Objekt sind.

7. Bildverarbeitungsvorrichtung nach Anspruch 1, wobei
die Merkmalsbetragsextraktionseinheit (320) enthält:
Mittel zum Korrigieren eines horizontalen Bewegungsbetrags (322), um einen horizontalen Bewegungsbetrag des Objektkandidaten in dem ersten Bild (110) und dem zweiten Bild (120) zu korrigieren, und
Mittel zum Korrigieren einer Skala (323), um eine Größe des Objektkandidaten in einer Skalierungsrichtung in dem ersten Bild (110) und dem zweiten Bild (120) zu korrigieren.

8. Bildverarbeitungsvorrichtung nach Anspruch 1, wobei
die Bilderfassungseinheit (100) konfiguriert ist, das erste Bild (110) und das zweite Bild (120) bei einer nächtlichen Scheinwerferlichtbestrahlung zu erfassen, und
die Einheit zur Bestimmung einer oberen und unteren Grenze der Luminanz (311) konfiguriert ist, zu bestimmen, dass ein Objekt durchgängig auf einer oberen Seite des Objektkandidaten vorhanden ist, falls die obere Seite des Objektkandidaten innerhalb eines voreingestellten unteren Grenzbereichs der Luminanz in dem ersten Bild (110) ist und wobei die Luminanz in eine Richtung des Übergangs von dem Objektkandidaten zu der oberen Seite stufenweise abnimmt.

9. Bildverarbeitungsvorrichtung nach Anspruch 1, wobei
dann, wenn es in dem ersten Bild (110) erweiterte Bereiche gibt, die durch Erweitern eines Bereichs des Objektkandidaten in vier Richtungen von nach oben, nach unten, nach rechts und nach links erhalten werden, und es einen erweiterten Bereich unter den erweiterten Bereichen gibt, der in die vier Richtungen gebildet wurde, in dem die Luminanz innerhalb des voreingestellten unteren Grenzbereichs für die Luminanz ist und die Luminanz stufenweise mit dem Abstand vom Objektkandidaten abnimmt, die Einheit zur Bestimmung einer oberen und unteren Grenze der Luminanz bestimmt, dass ein Objekt durchgängig in dem erweiterten Bereich vorhanden ist.

## Revendications

1. Dispositif de traitement d'images comprenant :
une unité d'acquisition d'images (100) destinée à acquérir une première image (110) et une deuxième image (120) ayant des conditions d'exposition mutuellement différentes,
une unité de détection d'objet candidat (200) destinée à détecter un objet candidat à partir de la première image (110), et
une unité de reconnaissance d'objet (300) destinée à reconnaître un objet à partir de la deuxième image (120) ayant des conditions d'exposition mutuellement différentes relativement à une pluralité de régions partielles à l'intérieur d'une région d'image qui correspond à l'objet candidat, dans lequel le dispositif de traitement d'images comprend en outre :
une unité de détermination configurée pour déterminer si oui ou non l'objet candidat est une cible de reconnaissance requérant une confirmation de la deuxième image (120),
une unité d'extraction de quantités de caractéristiques (320) configurée pour extraire individuellement des quantités de caractéristiques pour identification à partir de la première image (110) et de la deuxième image (120) dans un cas où il est déterminé que l'objet candidat est une cible de reconnaissance requérant une confirmation de la deuxième image (120), et
une unité d'identification d'objet (340) configurée pour intégrer les quantités de caractéristiques pour identification extraites individuellement à partir de la première image (110) et de la deuxième image (120) pour effectuer une identification d'un type d'objet de l'objet candidat,
**caractérisé en ce que** :
dans un cas où une distribution de luminance autour de l'objet candidat dans la première image (110) est analysée et confirmée comme étant une distribution de luminance prédéterminée, l'unité de détermination est configurée pour déterminer que l'objet candidat est une cible de reconnaissance requérant une confirmation de la deuxième image (120),
dans lequel l'unité de détermination inclut :
une unité de détermination de limites supérieures et inférieures de luminance (311) destinée à déterminer si oui ou non la luminance autour de l'objet candidat dans la première image (110) est à l'intérieur de plages de limites supérieures et inférieures préfixées,
une unité de détermination préliminaire de type de reconnaissance (312) destinée à réduire les types d'objets de l'objet candidat dans un cas où il est déterminé que la luminance autour de l'objet candidat tombe à l'intérieur des plages de limites supérieures et inférieures préfixées, et
une unité d'extraction de région candidate (313) destinée à extraire une région candidate par rapport à un résultat de réduction du type d'objet de l'objet candidat.

2. Dispositif de traitement d'images selon la revendication 1, dans lequel une troisième image devant être utilisée pour chacune des régions partielles est déterminée par rapport à une plage de rayonnement d'un phare d'un véhicule propre.

3. Dispositif de traitement d'images selon la revendication 2, comprenant en outre :
une unité de détermination destinée à déterminer si oui ou non il y a un objet candidat qui existe partiellement sur la plage de rayonnement du phare du propre véhicule, dans lequel
l'unité de détection d'objet candidat (200) est configurée pour reconnaître l'objet candidat à partir de la première image (110) et de la deuxième image (120) ayant des conditions d'exposition différentes dans un cas où l'objet candidat existe partiellement sur la plage de rayonnement du phare du propre véhicule.

4. Dispositif de traitement d'images selon la revendication 3, dans lequel l'unité de détermination est configurée pour déterminer que l'objet candidat existe partiellement sur la plage de rayonnement du phare du propre véhicule dans un cas où une gradation de luminance est détectée par un histogramme d'image.

5. Dispositif de traitement d'images selon la revendication 1, dans lequel le dispositif de traitement d'images est configuré pour être utilisé pour une caméra stéréoscopique qui capture des images avec des conditions d'exposition différentes en série temporelle, dans lequel
l'unité de détection d'objet candidat (200) est configurée
pour extraire un objet candidat à partir d'images de gauche et de droite capturées simultanément sous une première condition d'exposition par des caméras de gauche et de droite, et
pour extraire un objet candidat à partir des images de gauche et de droite capturées simultanément sous une seconde condition d'exposition par les caméras de gauche et droite, et
l'unité de reconnaissance d'objet (300) est configurée pour déterminer si oui ou non les objets candidats extraits par rapport aux différentes conditions d'exposition sont un même objet, et pour spécifier un type de l'objet dans un cas où les objets candidats ont été déterminés comme étant le même objet.

6. Dispositif de traitement d'images selon la revendication 5, dans lequel le dispositif de traitement d'images est configuré pour exécuter une détermination quant à savoir si oui ou non les objets candidats sont le même objet par rapport à des informations de luminance concernant l'objet candidat et sur la base d'une similarité d'une ou de plusieurs conditions quelconques parmi une profondeur, une vitesse de déplacement et une taille d'objet des objets candidats.

7. Dispositif de traitement d'images selon la revendication 1, dans lequel l'unité d'extraction de quantités de caractéristiques (320) inclut :
un moyen de correction de quantités de déplacement horizontal (322) destiné à corriger une quantité de déplacement horizontal de l'objet candidat dans la première image (110) et la deuxième image (120), et
un moyen de correction d'échelle (323) destiné à corriger une taille de l'objet candidat dans une direction d'échelle dans la première image (110) et la deuxième image (120).

8. Dispositif de traitement d'images selon la revendication 1, dans lequel l'unité d'acquisition d'images (100) est configurée pour acquérir la première image (110) et la deuxième image (120) au niveau d'un rayonnement de phare la nuit, et
l'unité de détermination de limites supérieures et inférieures de luminance (311) est configurée pour déterminer qu'un objet existe en continu sur un côté supérieur de l'objet candidat dans un cas où le côté supérieur de l'objet candidat est à l'intérieur d'une plage de limites inférieures de luminance préfixée dans la première image (110) et où la luminance diminue graduellement dans une direction d'une transition depuis l'objet candidat jusqu'au côté supérieur.

9. Dispositif de traitement d'images selon la revendication 1, dans lequel dans un cas où, dans la première image (110),
il y a des régions élargies obtenues en élargissant une région de l'objet candidat dans quatre directions vers le haut, vers le bas, vers la droite et vers la gauche, et où il y a une région élargie, parmi les régions élargies formées dans les quatre directions, dans laquelle la luminance est à l'intérieur de la plage de limites inférieures de luminance préfixée et la luminance diminue graduellement en éloignement de l'objet candidat, l'unité de détermination de limites supérieures et inférieures de luminance détermine qu'un objet est présent en continu dans la région élargie.
